(19) Europäisches Patentamt
European Patent Office
Office européen des brevets

(11) **EP 4 579 606 A1**

(12) **DEMANDE DE BREVET EUROPEEN**

(43) Date de publication:
**02.07.2025   Bulletin 2025/27**

(21) Numéro de dépôt: **24223450.8**

(22) Date de dépôt: **27.12.2024**

(51) Classification Internationale des Brevets (IPC):
**G06V 10/34** *(2022.01)*   **G06V 10/82** *(2022.01)*
**G06V 20/52** *(2022.01)*   **G06V 20/64** *(2022.01)*
**G06V 40/10** *(2022.01)*

(52) Classification Coopérative des Brevets (CPC):
**G06V 40/103; G06V 10/34; G06V 10/82; G06V 20/52; G06V 20/647**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:  **29.12.2023  FR 2315483**

(71) Demandeur: **THALES**
**92190 Meudon (FR)**

(72) Inventeurs:
• **HAUGEARD, Jean-Emmanuel**
  **91767 PALAISEAU (FR)**
• **CHIETERA, Andreina**
  **91767 PALAISEAU (FR)**
• **MOLIN, Stéphanie**
  **91767 PALAISEAU (FR)**

(74) Mandataire: **Lavoix**
**2, place d'Estienne d'Orves**
**75441 Paris Cedex 09 (FR)**

(54) **PROCÉDÉ DE LOCALISATION D'INDIVIDUS DANS UN RÉFÉRENTIEL TRIDIMENSIONNEL À PARTIR D'IMAGES EN DEUX DIMENSIONS CAPTÉES PAR UNE CAMÉRA FIXE ET DISPOSITIF DE LOCALISATION ASSOCIÉ**

(57)    Ce procédé de localisation d'individus dans un référentiel tridimensionnel comprenant un plan sol, à partir d'images en deux dimensions captées par une caméra fixe ayant un champ de vision d'un espace de surveillance tridimensionnel (5), chaque image captée étant représentée par une matrice de pixels, ayant chacun une position dans un référentiel bidimensionnel (U, V), comprend des étapes de : calibration géométrique de la caméra associant chacun des pixels des images en deux dimensions captées par ladite caméra avec une position cartésienne dans le référentiel tridimensionnel de l'espace de surveillance (5); traitement d'images à deux dimensions, captées par la caméra, pour détection d'au moins un élément identifiable (20A, 20B, 20C, 20D) du corps d'un individu (10); estimation d'une position absolue (24) de l'individu sur le plan sol du référentiel tridimensionnel en fonction de l'au moins un élément identifiable, d'une hauteur moyenne prédéterminée de l'individu et de ladite calibration géométrique.

FIG.3

EP 4 579 606 A1

**Description**

La présente invention concerne un procédé de localisation d'individus dans un référentiel tridimensionnel à partir d'images en deux dimensions captées par une caméra fixe. La présente invention concerne également un dispositif de localisation associé à un tel procédé.

Dans différents domaines tels que la sécurité, la robotique ou la navigation, il est nécessaire de pouvoir localiser un individu situé dans différents environnements. Les aéroports, les gares ou encore les entrepôts sont des lieux sensibles et ont besoin d'être surveillés grâce à une localisation tridimensionnelle des individus qui y transitent malgré des perturbations dues à plusieurs contraintes telles que la foule ou les occultations.

Pour localiser efficacement des individus dans ces lieux, différentes méthodes sont généralement employées en fonction des besoins.

Les méthodes de localisation de l'état de la technique comportent tout type de technologies parmi lesquelles : les balises, le GPS, les caméras, les Lidar ou les puces RFID.

Toutes ces technologies sont plus ou moins utilisées dans le domaine de la sécurité et présentent des avantages et des désavantages toujours selon les besoins.

Globalement, les balises, les GPS, les caméras, les Lidar et tous les autres types de capteur posent encore beaucoup de problèmes de coût et d'applicabilité dans les environnements complexes tandis que les puces RFID mais aussi les balises, impliquent une intrusion et une précision encore trop limitatives.

Les caméras restent alors la technologie la plus utilisée pour localiser des individus dans des environnements spécifiques.

Cependant, il est connu que les caméras sont souvent limitées à une surveillance en deux dimensions et ont des performances encore limitées dans des environnements complexes tels que les gares ou les aéroports.

Il existe donc un besoin pour une localisation d'individus dans un référentiel tridimensionnel de bonne précision qui soit moins onéreuse, moins intrusive et plus adaptée aux environnements complexes.

A cet effet, la présente description a pour objet un procédé de localisation d'individus dans un référentiel tridimensionnel, comprenant un plan sol, à partir d'images en deux dimensions captées par une caméra fixe, la caméra ayant un champ de vision d'un espace de surveillance tridimensionnel, chaque image captée étant représentée par une matrice de pixels, chaque pixel ayant une position dans un référentiel bidimensionnel de l'image. Ce procédé comprend les étapes suivantes :

-   calibration géométrique de la caméra associant chacun des pixels des images en deux dimensions captées par ladite caméra avec une position cartésienne dans le référentiel tridimensionnel de l'espace de surveillance;
-   traitement d'images à deux dimensions, captées par la caméra, pour détection d'au moins un élément identifiable du corps d'un individu, chaque élément identifiable ayant une position associée dans le référentiel bidimensionnel ;

estimation d'une position absolue de l'individu sur le plan sol du référentiel tridimensionnel en fonction de l'au moins un élément identifiable, d'une hauteur moyenne prédéterminée de l'individu et de ladite calibration géométrique. Avantageusement, l'estimation de la position absolue de l'individu en fonction d'au moins un élément identifiable du corps d'un individu et de la hauteur moyenne prédéterminée de l'individu permet d'améliorer la précision de positionnement dans le référentiel tridimensionnel à partir d'images en deux dimensions.

Suivant d'autres aspects avantageux de l'invention, le procédé comprend une ou plusieurs des caractéristiques suivantes prise(s) isolément ou suivant toutes les combinaisons possibles.

Le procédé comporte en outre une étape de reconstruction comportant une détermination d'une silhouette de l'individu en trois dimensions à partir de l'estimation d'une position absolue de l'individu sur le plan sol du référentiel tridimensionnel et de ladite hauteur moyenne de l'individu prédéterminée.

L'étape de traitement comporte une détection d'au moins 4 éléments identifiables.

L'étape de traitement comporte une détection d'un nombre d'éléments identifiables configurable.

L'étape d'estimation de la position absolue de l'individu sur le plan sol du référentiel tridimensionnel comporte un calcul d'une moyenne de positions estimées de l'individu dans le référentiel tridimensionnel.

L'étape de traitement d'images à deux dimensions met en oeuvre par un réseau de neurones.

Les éléments identifiables du corps d'un individu dans une image à deux dimensions font partie d'un ensemble comprenant les pieds, la tête, les hanches, les épaules, les yeux ou le nez.

L'étape d'estimation d'une position absolue de l'individu sur le plan sol du référentiel tridimensionnel met en oeuvre une matrice de calibration.

L'invention a également pour objet un dispositif de localisation d'individus dans un référentiel tridimensionnel comprenant un plan sol, à partir d'images en deux dimensions captées par une caméra fixe, le dispositif étant connecté ou intégré dans ladite caméra, la caméra ayant un champ de vision d'un espace de surveillance tridimensionnel, chaque image captée étant représentée par une matrice de pixels, chaque pixel ayant une position dans un référentiel bidimensionnel de l'image. Ce dispositif comprend un processeur configuré pour mettre en oeuvre :

- un module de calibration géométrique de la caméra associant chacun des pixels des images en deux dimensions captées par ladite caméra avec une position cartésienne dans le référentiel tridimensionnel de l'espace de surveillance;
- un module de traitement d'images à deux dimensions, captées par la caméra, [pour détection d'au moins un élément identifiable du corps d'un individu, chaque élément identifiable ayant une position associée dans le référentiel bidimensionnel ;
- un module d'estimation d'une position absolue de l'individu sur le plan sol du référentiel tridimensionnel en fonction de l'au moins un élément identifiable, d'une hauteur moyenne prédéterminée de l'individu et de ladite calibration géométrique.

Selon un autre aspect, l'invention concerne un système de localisation d'individus dans un référentiel tridimensionnel, comportant une caméra fixe et un dispositif de localisation d'individus dans un référentiel tridimensionnel comprenant un plan sol, à partir d'images en deux dimensions captées par ladite caméra fixe, le dispositif de localisation étant tel que brièvement décrit ci-dessus.

Selon un autre aspect, l'invention concerne un programme d'ordinateur comportant des instructions logicielles, qui, lorsqu'elles sont exécutées par ordinateur, mettent en oeuvre un procédé de localisation d'individus dans un référentiel tridimensionnel tel que brièvement décrit ci-dessus.

L'invention apparaitra plus clairement à la lecture de la description qui va suivre, donnée uniquement à titre d'exemple non limitatif et faite en référence aux dessins dans lesquels :

[Fig. 1] la figure 1 est une représentation schématique d'un système de localisation d'un individu dans un espace de surveillance tridimensionnel comprenant un plan sol, ladite surveillance étant mise en oeuvre par un dispositif de localisation associé à une caméra fixe ;

[Fig.2] la figure 2 est un organigramme des étapes du procédé de localisation par le dispositif de localisation de la figure 1 ;

[Fig. 3] la figure 3 est une représentation schématique d'une détermination d'une silhouette de l'individu dans l'espace de surveillance tridimensionnel.

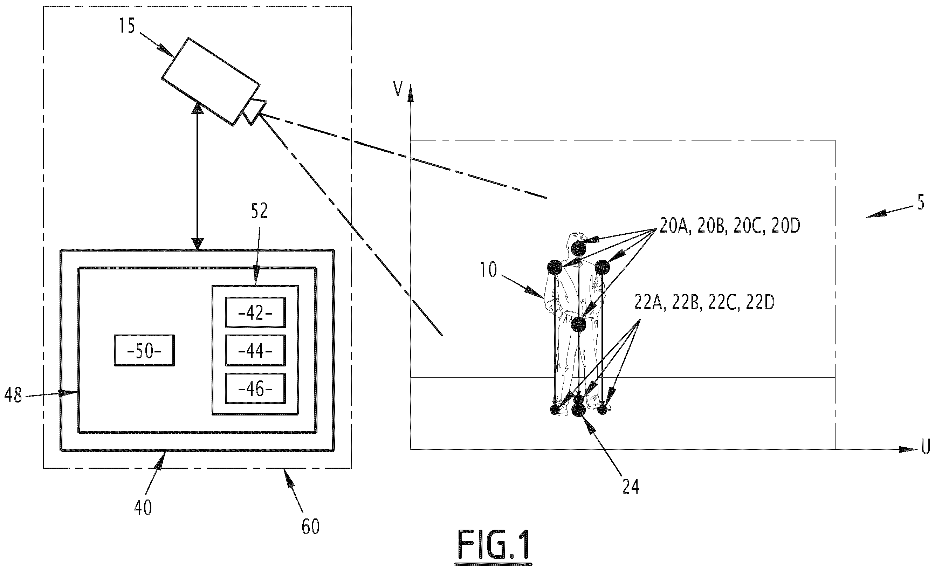

Sur la figure 1, un espace de surveillance tridimensionnel 5 comprenant un individu 10 est surveillé à l'aide d'images en deux dimensions dans un référentiel bidimensionnel d'axes perpendiculaires (U, V) muni d'un repère d'axe transversal V et d'axe longitudinal U, le repère étant centré sur le bord inférieur gauche des images captées par une caméra 15, par exemple une caméra optique.

L'espace de surveillance 5 est inclus dans un référentiel tridimensionnel comportant un axe longitudinal X, un axe transversal Y et un axe antéropostérieur Z. Par exemple, le référentiel tridimensionnel est le référentiel terrestre (ou référentiel monde).

La caméra 15 est par exemple une caméra de vidéosurveillance, configurée pour capter des successions d'images à une fréquence de capture prédéterminée. La caméra 15 est positionnée spatialement à une position prédéterminée. En d'autres termes, la caméra 15 a une position fixe dans l'espace.

Avantageusement, cela permet de calculer une calibration géométrique fiable entre le référentiel tridimensionnel et le référentiel bidimensionnel.

L'espace de surveillance tridimensionnel 5 est dans un champ de vision direct de la caméra 15.

Chaque image en deux dimensions captée est représentée par une matrice de pixels, chaque pixel ayant une position dans le référentiel bidimensionnel associé à l'image.

Dans la suite de la description, il est considéré que l'ensemble des pixels composant les images en deux dimensions correspondent à des positions cartésiennes dans le référentiel tridimensionnel.

La caméra 15 comprend ou est connectée à un dispositif de localisation 40. Le dispositif de localisation 40 et la caméra 15 forment un système de localisation 60 d'un individu dans le référentiel tridimensionnel.

Le dispositif de localisation 40 est un dispositif électronique programmable, e.g. un ordinateur, configuré pour communiquer par une liaison de communication, filaire ou sans fil, avec la caméra 15.

Selon une variante, le dispositif de localisation 40 est une unité de traitement intégrée dans la caméra 15.

Le dispositif de localisation 40 d'individus dans un référentiel tridimensionnel met en oeuvre une détection d'une pluralité d'éléments identifiables 20A, 20B, 20C, 20D du corps dudit individu 10, et une estimation d'une pluralité de positions estimées 22A, 22B, 22C, 22D associées à chacun des éléments identifiables 20A, 20B, 20C, 20D et d'une position absolue 24.

La pluralité d'éléments identifiables 20A, 20B, 20C, 20D est un ensemble de parties physiques caractéristiques d'un individu 10 étant choisies, par exemple, parmi le groupe consistant en : pieds, tête, hanches, épaules, yeux ou nez.

De plus, chaque élément identifiable 20A, 20B, 20C, 20D possède alors une position bidimensionnelle dans le référentiel bidimensionnel de l'image.

La pluralité des positions estimées 22A, 22B, 22C, 22D sont des projections dans le référentiel tridimensionnel, sur le plan sol, selon l'axe Y des positions bidimensionnelles de la pluralité d'éléments identifiables 20A, 20B, 20C, 20D dans le référentiel bidimensionnel, les projections utilisant une hauteur moyenne prédéterminée de l'individu.

Le dispositif de localisation 40 est configuré pour estimer une position absolue 24 de l'individu 10 considérée comme un point des pieds dudit individu 10 dans le référentiel tridimensionnel.

Le dispositif de localisation 40 comprend une unité de traitement d'informations 48, formée par exemple d'un processeur 50, et d'une mémoire électronique 52 associée au processeur 50.

Le dispositif de localisation 40 comprend un module de calibration géométrique 42, un module de traitement d'images 44 et d'un module d'estimation de position 46.

Le module de calibration géométrique 42 est configuré pour associer chacun des pixels des images en deux dimensions captées par la caméra 15 avec une position cartésienne dans le référentiel tridimensionnel, les pixels étant projetés au sol de l'espace de surveillance 5.

Le module de traitement d'images 44 est configuré pour détecter au moins un élément identifiable 20A, 20B, 20C, 20D du corps d'un individu 10, chaque élément identifiable 20A, 20B, 20C, 20D ayant une position associée dans le référentiel bidimensionnel.

Le module d'estimation de position 46 est configuré pour estimer une position absolue 24 de l'individu sur le plan sol du référentiel tridimensionnel en fonction de l'au moins un élément identifiable 20A, 20B, 20C, 20D, d'une hauteur moyenne prédéterminée de l'individu et de la calibration géométrique.

Dans un mode de réalisation, le module de calibration géométrique 42, le module de traitement d'images 44 et le module d'estimation de position 46 sont réalisés sous forme d'un logiciel, ou d'une brique logicielle, exécutable par le processeur 50. La mémoire 52 est alors apte à stocker des logiciels de calibration, de traitement d'images et d'estimation.

En variante non représentée, le module de calibration géométrique 42, le module de traitement d'images 44 et le module d'estimation de position 46 sont réalisés sous forme d'un composant logique programmable, tel qu'un FPGA (de l'anglais *Field Programmable Gate Array*), ou encore sous forme d'un circuit intégré, tel qu'un ASIC (de l'anglais *Application Spécifie Integrated Circuit).*

Dans un mode de réalisation, le module de traitement d'images 44 met en oeuvre un réseau de neurones préalablement entraîné pour reconnaître à partir d'images bidimensionnelles et positionner dans le référentiel bidimensionnel de chaque image, au moins un élément identifiable du corps de l'individu.

De manière générale, le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un tel réseau de neurones est entraîné sur une base de données comportant des images d'individus possédant des éléments identifiables 20A, 20B, 20C, 20D tels que défini précédemment.

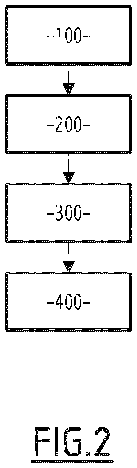

Le fonctionnement du dispositif de localisation 40 est maintenant décrit en référence à la figure 2 qui illustre les principales étapes d'un procédé de localisation dans un mode de réalisation.

Le procédé de localisation comporte une première étape de calibration géométrique 100 associant chacun des pixels des images en deux dimensions captées par le dispositif vidéo 15 avec une position cartésienne dans le référentiel tridimensionnel.

Par exemple, le module de calibration géométrique 42 effectue une calibration géométrique à partir de matrices de calibration, selon la relation suivante pour un point P de coordonnées cartésiennes (X, Y, Z) dans le référentiel tridimensionnel dont l'image est de coordonnées (u.v) dans l'image 2D:

[MATH 1]

$$\begin{pmatrix} u \\ v \\ 1 \end{pmatrix} = M_{int} M_{ext} \begin{pmatrix} X \\ Y \\ Z \\ 1 \end{pmatrix}$$

Avec :$M_{int}M_{ext}$ : matrice de projection associant chaque pixel à une position cartésienne dans le référentiel tridimensionnel,

- $M_{int}$ : matrice dite intrinsèque, dont les coefficients sont les paramètres intrinsèques de la caméra
- $M_{ext}$: matrice dite extrinsèque, dont les coefficients sont des paramètres extrinsèques qui peuvent varier suivant la position de la caméra, ces paramètres représentant une translation et une rotation

Ainsi, en fonction d'une matrice de pixels de l'image captée, une matrice de calibration est déterminée associant chaque point du référentiel tridimensionnel à un pixel de la matrice de pixels.

La calibration géométrique est mise en oeuvre de façon manuelle par un opérateur pour plus de précision.

En complément, lors de la calibration géométrique, d'éventuelles distorsions géométriques sont prises en compte à l'aide de méthodes diverses telle que la méthode de mire à damiers.

En variante, la calibration géométrique est mise en oeuvre de façon semi-automatique ou automatique pour un déploiement facilité, la méthode de calibration automatique comportant une recherche de la ligne d'horizon ou de points de fuite à partir d'éléments structurants de l'image ou à partir d'un damier.

Dans une étape de traitement d'images 200 à deux dimensions, le module de traitement d'images 44 met en oeuvre une détection d'au moins un élément identifiable 20A, 20B, 20C, 20D chaque élément identifiable 20A, 20B, 20C, 20D ayant une position estimée 22A, 22B, 22C, 22D associée.

Comme expliqué précédemment, de préférence l'étape de traitement d'images 200 met en oeuvre un réseau de neurones préalablement entrainé pour détecter lesdits éléments identifiables 20A, 20B, 20C, 20D. Par exemple, l'étape de traitement d'images 200 met en oeuvre un algorithme d'apprentissage profond, parmi les algorithmes suivants : CMU open-pose, Mask RCNN, AlphaPose.

De préférence, l'étape de traitement d'images 200 comporte une détection d'au moins 4 éléments identifiables 20A, 20B, 20C, 20D.

En variante, l'étape de traitement d'images 200 comporte une détection d'un nombre d'éléments identifiables 20A, 20B, 20C, 20D configurable.

Enfin, dans une étape d'estimation de position 300, le module d'estimation de position 46 calcule une position absolue 24 de l'individu 10 dans l'espace de surveillance tridimensionnel 5 à partir de la calibration géométrique, de l'au moins un élément identifiable 20A, 20B, 20C, 20D du corps de l'individu 10 et d'une hauteur moyenne de l'individu 10 prédéterminée.

La hauteur moyenne de l'individu est configurable, elle est par exemple fixée à 1m75.

A partir de la hauteur moyenne prédéterminée de l'individu, une hauteur moyenne prédéterminée de chaque élément identifiable de l'individu est estimée.

Ainsi, considérant une hauteur moyenne de l'individu fixée à 1m75, la hauteur prédéterminée des hanches de l'individu 10 est estimée à 88cm, la hauteur prédéterminée des épaules et du cou de l'individu 10 est estimée à 1m52.

Connaissant la position de chaque élément identifiable du corps de l'individu 10 et la hauteur moyenne de chaque élément $Y_e$, en utilisant la matrice de projection, la position :

[MATH 2]

$$Pos_{est(i)} = f(Mint, Mext, Pu, Pv, Ye)$$

Avec :

- $Pos_{est(i)}$ : position estimée de l'élément identifiable i ;
- $P_u$ : position bidimensionnel de l'élément identifiable i selon l'axe u ;
- $P_v$ : position bidimensionnel de l'élément identifiable i selon l'axe v ;
- $Y_e$ : hauteur moyenne de l'élément i
- f : fonction de projection, qui permet de résoudre [Math1], et qui à partir des matrices de projection $M_{int}$ et $M_{ext}$, de la position du pixel ($P_u$,$P_v$) et de la hauteur Ye estime X,Z.

Dans un mode de réalisation, la position absolue 24 de l'individu dans le plan sol du référentiel tridimensionnel est déduite de la moyenne des positions estimées sur le plan sol 22A, 22B, 22C, 22D associées à chacun des éléments identifiables 20A, 20B, 20C, 20D et de la calibration géométrique telle que :

[MATH 3]

$$Pos_{abs} = \frac{Pos_{est(1)} + \cdots + Pos_{est(E)}}{E}$$

Avec :

- $Pos_{abs}$ : position absolue 24 dans le référentiel tridimensionnel,
- E : nombre d'éléments identifiables,

En variante, chaque élément identifiable 20A, 20B, 20C, 20D est associé à un poids de fiabilité permettant de déterminer la position absolue 24 selon une moyenne pondérée des positions estimées 22A, 22B, 22C, 22D de chacun des éléments identifiables 20A, 20B, 20C, 20D associés audit poids de fiabilité tel que :

[MATH 4]

$$Pos_{abs} = \frac{A_1 Pos_{est(1)} + \cdots + A_E Pos_{est(E)}}{A_1 + \cdots + A_E}$$

Avec :

- $A_1$ : poids de fiabilité de l'élément identifiable i.

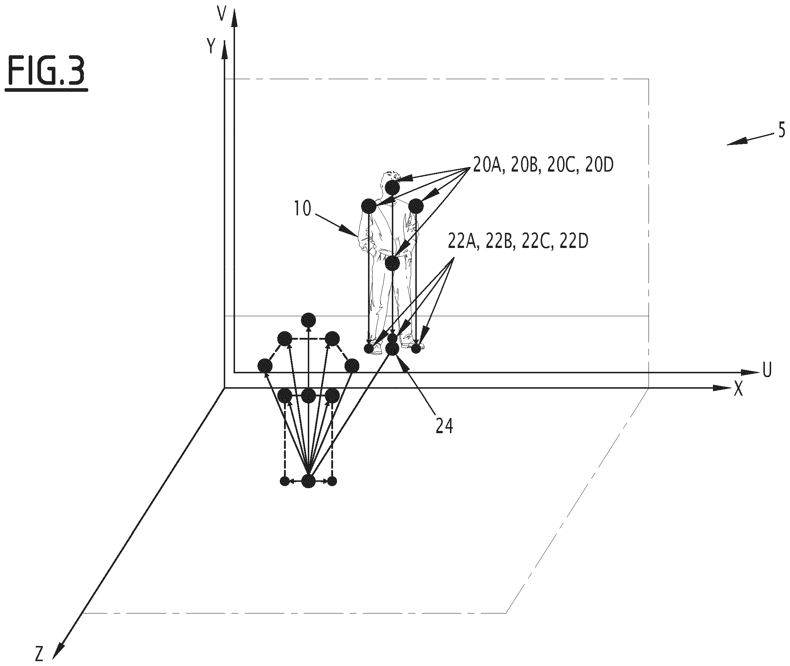

En variante et en référence à la figure 3, lors d'une étape de reconstruction 400, une silhouette numérique de l'individu 10, dans le référentiel tridimensionnel, est déterminée à partir de l'estimation de la position absolue 24 de l'individu 10 et d'au moins une hauteur moyenne prédéterminée de l'individu.

En complément, un identifiant est associé à chaque silhouette ainsi reconstruite et permet de suivre un individu 10 dans une foule.

On conçoit alors que le procédé de localisation, et le dispositif de localisation 40 associé, permettent de localiser un individu 10 de façon précise à partir d'image captées par des caméras classiques, rendant cette localisation économique, flexible et non intrusive.

Le procédé proposé est particulièrement utile pour obtenir une localisation plus précise des individus en présence d'occlusions dans le champ de prise de vue de la caméra, puisque la position absolue prend en compte une hauteur moyenne estimée en fonction de la hauteur moyenne prédéterminée de l'individu pour chaque élément identifié du corps de l'individu.

**Revendications**

1.    Procédé de localisation d'individus dans un référentiel tridimensionnel, comprenant un plan sol, à partir d'images en deux dimensions captées par une caméra fixe, la caméra ayant un champ de vision d'un espace de surveillance tridimensionnel (5), chaque image captée étant représentée par une matrice de pixels, chaque pixel ayant une position dans un référentiel bidimensionnel de l'image, le procédé étant **caractérisé en ce qu'**il comprend les étapes suivantes :

- calibration géométrique (100) de la caméra associant chacun des pixels des images en deux dimensions captées par ladite caméra avec une position cartésienne dans le référentiel tridimensionnel de l'espace de surveillance (5);

- traitement d'images (200) à deux dimensions, captées par la caméra, pour détection d'au moins un élément identifiable (20A, 20B, 20C, 20D) du corps d'un individu (10), chaque élément identifiable (20A, 20B, 20C, 20D) ayant une position associée dans le référentiel bidimensionnel ;

- estimation (300) d'une position absolue (24) de l'individu sur le plan sol du référentiel tridimensionnel en fonction de l'au moins un élément identifiable (20A, 20B, 20C, 20D), d'une hauteur moyenne prédéterminée de l'individu et de ladite calibration géométrique.

2.  Procédé selon la revendication 1, comportant en outre une étape de reconstruction (400) comportant une détermination d'une silhouette de l'individu (10) en trois dimensions à partir de l'estimation d'une position absolue (24) de l'individu (10) sur le plan sol du référentiel tridimensionnel et de ladite hauteur moyenne de l'individu prédéterminée.

3.  Procédé selon l'une quelconque des revendications 1 ou 2, dans lequel l'étape de traitement (200) comporte une détection d'au moins 4 éléments identifiables (20A, 20B, 20C, 20D).

4.  Procédé selon l'une quelconque des revendications 1 à 3, dans lequel l'étape de traitement (200) comporte une détection d'un nombre d'éléments identifiables (20A, 20B, 20C, 20D) configurable.

5.  Procédé selon l'une quelconque des revendications 1 à 4, dans lequel l'étape d'estimation (300) de la position absolue (24) de l'individu sur le plan sol du référentiel tridimensionnel comprend un calcul d'une moyenne de positions estimées (22A, 22B, 22C, 22D) de l'individu (10) dans le référentiel tridimensionnel.

6.  Procédé selon l'une quelconque des revendications 1 à 5, dans lequel l'étape de traitement d'images (200) à deux dimensions met en oeuvre par un réseau de neurones.

7.  Procédé selon l'une quelconque des revendications 1 à 6, dans lequel les éléments identifiables (20A, 20B, 20C, 20D) du corps d'un individu (10) dans une image à deux dimensions font partie d'un ensemble comprenant les pieds, la tête, les hanches, les épaules, les yeux ou le nez.

8.  Procédé selon l'une quelconque des revendications 1 à 7, dans lequel l'étape d'estimation (300) d'une position absolue (24) de l'individu (10) sur le plan sol du référentiel tridimensionnel met en oeuvre une matrice de calibration.

9.  Programme d'ordinateur comportant des instructions logicielles, qui, lorsqu'elles sont exécutées par ordinateur, mettent en oeuvre un procédé de localisation selon l'une quelconque des revendications 1 à 8.

10. Dispositif de localisation (40) d'individus dans un référentiel tridimensionnel comprenant un plan sol, à partir d'images en deux dimensions captées par une caméra fixe, le dispositif étant connecté ou intégré dans ladite caméra, la caméra ayant un champ de vision d'un espace de surveillance tridimensionnel (5), chaque image captée étant représentée par une matrice de pixels, chaque pixel ayant une position dans un référentiel bidimensionnel de l'image, le dispositif étant **caractérisé en ce qu'**il comprend un processeur configuré pour mettre en oeuvre :

- un module de calibration géométrique (42) de la caméra associant chacun des pixels des images en deux dimensions captées par ladite caméra avec une position cartésienne dans le référentiel tridimensionnel de l'espace de surveillance (5);

- un module (44) de traitement d'images à deux dimensions, captées par la caméra, [pour détection d'au moins un élément identifiable (20A, 20B, 20C, 20D) du corps d'un individu (10), chaque élément identifiable (20A, 20B, 20C, 20D) ayant une position associée dans le référentiel bidimensionnel ;

- un module (46) d'estimation d'une position absolue (24) de l'individu sur le plan sol du référentiel tridimensionnel en fonction de l'au moins un élément identifiable (20A, 20B, 20C, 20D), d'une hauteur moyenne prédéterminée de l'individu et de ladite calibration géométrique.

11. Système de localisation (60) d'individus dans un référentiel tridimensionnel **caractérisé en ce qu'**il comprend une caméra (15) fixe et un dispositif de localisation (40) d'individus dans un référentiel tridimensionnel comprenant un plan sol, à partir d'images en deux dimensions captées par ladite caméra fixe (15), le dispositif de localisation (40) étant conforme à la revendication 10.

EP 4 579 606 A1

FIG.1

**FIG.2**

FIG.3

5

20A, 20B, 20C, 20D

22A, 22B, 22C, 22D

24

10

X

U

Y

V

Z

Europäisches
Patentamt

European
Patent Office

Office européen
des brevets

# RAPPORT DE RECHERCHE EUROPEENNE

**Numéro de la demande**

EP 24 22 3450

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/292533 A1 (UCHIYAMA HIROYUKI [JP] ET AL) 6 octobre 2016 (2016-10-06) | 1,2,5, 8-11 | INV. G06V10/34 |
| Y | * alinéas [0002], [0037], [0038], [0052] - [0054], [0063], [0064], [0066]; figure 2 * | 3,4,6,7 | G06V10/82 G06V20/52 G06V20/64 G06V40/10 |
| | ----- | | |
| Y | US 2019/130602 A1 (HALL JAMES [US] ET AL) 2 mai 2019 (2019-05-02) * alinéa [0041]; figure 4D * | 3,4,6,7 | |
| | ----- | | |

**DOMAINES TECHNIQUES RECHERCHES (IPC)**

G06V

Le présent rapport a été établi pour toutes les revendications

| Lieu de la recherche | Date d'achèvement de la recherche | Examinateur |
|---|---|---|
| La Haye | 8 avril 2025 | Natanni, Francesco |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 3450

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-04-2025

| Document brevet cité au rapport de recherche | Date de publication | Membre(s) de la famille de brevet(s) | Date de publication |
|---|---|---|---|
| US 2016292533 A1 | 06-10-2016 | AUCUN | |
| US 2019130602 A1 | 02-05-2019 | AUCUN | |

EPO FORM P0460

Pour tout renseignement concernant cette annexe : voir Journal Officiel de l'Office européen des brevets, No.12/82